# EUROPEAN PATENT APPLICATION

(11) **EP 4 149 177 A1**
(43) Date of publication of application: **15.03.2023**
(21) Application number: 20934713.7
(22) Date of filing: 08.05.2020
(51) Int. Cl.: H04W 56/00

(54) **SYNCHRONIZATION SIGNAL TRANSMISSION METHOD AND APPARATUS, AND DEVICE AND READABLE STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: dompatent von Kreisler Selting Werner - Partnerschaft von Patent- und Rechtsanwälten mbB
(86) International application number: PCT/CN2020/089230
(87) International publication number: WO 2021/223227

(57) **Abstract**

The present invention relates to the field of communications and provides a synchronization signal transmission method and apparatus, and a device and a readable storage medium. The method comprises: determining transmission cycles for transmitting a first synchronization signal; and determining, between the two transmission cycles of the first synchronization signal, a transmission resource for transmitting a second synchronization signal, wherein the second synchronization signal is a synchronization signal corresponding to a target service terminal. The transmission of the second synchronization signal is added between the transmission cycles of the first synchronization signal, so that the target service terminal can receive the second synchronization signal, thereby reducing the total duration of receiving multiple synchronization signals, and reducing power consumption of the device while reducing the number of device antennas.

## Description

### FIELD

The present disclosure relates to a field of communication, particularly to a method and an apparatus for synchronization signal transmission, a device and a readable storage medium.

### BACKGROUND

The 3rd Generation Partnership Project (3GPP) defines three major directions of 5G application scenarios: enhancement mobile broadband (eMBB), massive machine type of communication (mMTC), and ultra reliable & low latency communication (URLLC). Therefore, the current 5G new radio (NR) system is mainly designed for high-level terminals with high-speed and low latency, but it has difficulty meeting the requirements of some mid-level machine types of communication devices.

In some mid-level machine type of communication devices, in order to save costs and reduce the size of the devices, the number of antennas is usually reduced, resulting in an increase in the duration of receiving synchronization signals, thus increasing the power consumption of the devices.

### SUMMARY

The present disclosure provides a method and an apparatus for synchronization signal transmission, a device, and a readable storage medium, which can reduce power consumption of a device receiving synchronization signals while reducing the number of device antennas. The technical solution may be as follows.

According to an aspect of the present disclosure, a method for synchronization signal transmission is provided. The method is performed by an access network device, and the method includes:
determining a transmission cycle for transmitting a first synchronization signal; and
determining, between two transmission cycles of the first synchronization signal, a transmission resource for transmitting a second synchronization signal, the second synchronization signal being a synchronization signal corresponding to a target service terminal.

According to another aspect of the present disclosure, a method for synchronization signal transmission is provided. The method is performed by a terminal, and the method includes:
determining a transmission cycle for receiving a first synchronization signal; and
determining, between two transmission cycles of the first synchronization signal, a transmission resource for transmitting a second synchronization signal, the terminal being a target service terminal corresponding to the target service type.

According to another aspect of the present disclosure, an apparatus for synchronization signal transmission is provided. The apparatus is implemented by an access network device, and the apparatus includes:
a processing module, configured to determine a transmission cycle for transmitting a first synchronization signal;
the processing module is further configured to transmit a second synchronization signal between two transmission cycles of the first synchronization signal, the second synchronization signal being a synchronization signal corresponding to a target service terminal.

According to another aspect of the present disclosure, an apparatus for synchronization signal transmission is provided. The apparatus is implemented by a terminal, and the apparatus includes:
a processing module, configured to determine a transmission cycle for receiving a first synchronization signal;
the processing module is further configured to determine, between two transmission cycles of the first synchronization signal, a transmission resource for transmitting a second synchronization signal, the terminal being a target service terminal corresponding to the target service type.

According to another aspect of the present disclosure, a terminal is provided. The terminal includes:
a processor; and
a transceiver connected to the processor;
the processor is configured to load and execute executable instructions to implement the method for synchronization signal transmission according to the above embodiments of the disclosure.

According to another aspect of the present disclosure, an access network device is provided. The access network device includes:
a processor; and
a transceiver connected to the processor;
the processor is configured to load and execute executable instructions to implement the method for synchronization signal transmission according to the above embodiments of the disclosure.

According to another aspect of the present disclosure, a computer readable storage medium having at least one instruction, at least one program, a code set or an instruction set stored thereon is provided. The at least one instruction, the at least one program, the code set or the instruction set is loaded and executed by a processor to implement the method for synchronization signal transmission according to the above embodiments of the disclosure.

Beneficial effects of the technical solution provided by the embodiments of the present disclosure at least include the following.

By adding the transmission of the second synchronization signal between the transmission cycles of the first synchronization signal, the target service terminal can receive the second synchronization signal, thereby reducing total duration of receiving multiple synchronization signals, and reducing power consumption of the device while reducing the number of device antennas.

### BRIEF DESCRIPTION OF THE DRAWINGS

In order to more clearly explain the technical solution in the embodiments of the present disclosure, the following will briefly introduce the drawings may be used in the description of the embodiments. Obviously, the drawings in the following description are only some embodiments of the present disclosure. For those skilled in the art, other drawings can be obtained from these drawings without paying creative labor.
FIG. 1 is a block diagram of a communication system according to an exemplary embodiment of the present disclosure;
FIG. 2 is a schematic diagram illustrating a structure of a synchronization signal block according to an exemplary embodiment of the present disclosure;
FIG. 3 is a flow chart of a method for synchronization signal transmission according to an exemplary embodiment of the present disclosure;
FIG. 4 is a flow chart of a method for synchronization signal transmission according to another exemplary embodiment of the present disclosure;
FIG. 5 is a block diagram illustrating an apparatus for synchronization signal transmission according to an exemplary embodiment of the present disclosure;
FIG. 6 is a block diagram illustrating an apparatus for synchronization signal transmission according to another exemplary embodiment of the present disclosure;
FIG. 7 is a block diagram illustrating a terminal according to an exemplary embodiment of the present disclosure;
FIG. 8 is a block diagram illustrating an access network device according to an exemplary embodiment of the present disclosure.

### DETAILED DESCRIPTION

To make the purpose, technical solution and advantages of the disclosure clearer, embodiments of the disclosure will be further described in detail in combination with the accompanying drawings.

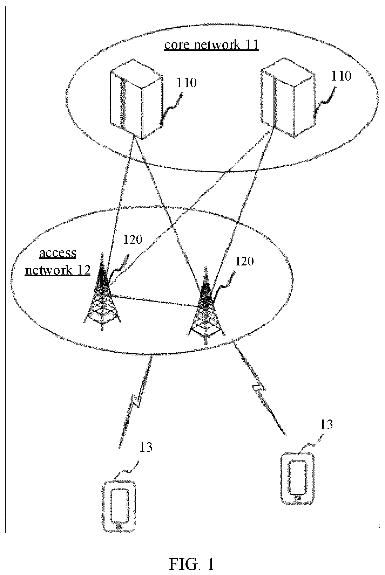

FIG. 1 is a block diagram of a communication system according to an exemplary embodiment of the present disclosure. The communication system includes a core network 11, an access network 12, and a terminal 13.

The core network 11 includes a plurality of core network devices 110. Core network device 110 includes a device having an access and mobility management function (AMF), a session management function (SMF), a user plane function (UPF), and the like. AMF is used to control functions of a terminal, such as an access right and switching, and SMF is used to provide server continuity and uninterrupted user experience of a server, such as changes of IP addresses and anchor points.

The access network 12 includes a plurality of access network devices 120. In some embodiments, an access network device 120 is a base station. The base station is a device deployed in the access network to provide wireless communication functions for terminals. Base stations include various forms of macro base stations, micro base stations, relay stations, access points, etc. In systems using different wireless access technologies, names of devices with base station functions may be different. For example, in long term evolution (LTE) systems, the devices with base station functions are called eNodeB or eNB. In a 5G new radio (NR) system, the devices with base station functions are called gNode B or gNB. With the evolution of communication technology, the name "base station" may change. For the convenience of the embodiments of the present disclosure, the above devices that provide wireless communication functions for terminals are collectively referred to as access network devices.

The terminal 13 includes various handheld devices, on-board devices, wearable devices, computing devices with wireless communication functions or other processing devices connected to wireless modems, as well as various forms of user equipment (UE), mobile stations (MS), terminal devices, etc. For the convenience of description, the devices mentioned above are collectively referred to as terminals. The access network device 120 and the terminal 13 communicate with each other through some air interface technology, such as a Uu interface.

In an LTE 4G system, in order to support the Internet of Things business, two technologies are proposed, namely, the machine type communication (MTC) and narrow band Internet of Things (NB IoT). These two technologies are mainly aimed at scenarios with low rate and high delay, such as meter reading and environmental monitoring. However, with the continuous development of the Internet of Things business, the speed and delay of the above two Internet of Things technologies cannot meet requirements of businesses such as video monitoring, smart home, wearable devices, industrial sensor monitoring, etc.

3GPP defines three major directions of 5G application scenarios: enhancement mobile broadband (eMBB), massive machine type of communication (mMTC), and ultra reliable & low latency communication (URLLC). The current 5G NR is mainly designed for high-level terminals with high speed and low latency, which cannot meet the requirements of cost control and complexity reduction. Therefore, it is proposed to design a new MTC technology in the 5G NR system to cover requirements of mid-level MTC NR-Lite device. Such mid-level MTC device usually needs to meet the following requirements: 1. low cost and low complexity; 2. a certain degree of coverage enhancement; 3. low power consumption. In order to meet the above requirements, the number of antennas in the mid-level MTC device is usually reduced, so as to save costs, reduce complexity and reduce device size.

Synchronization signal block (SSB) is a signal block broadcast by a cell to enable a terminal to find the cell. For example, when the terminal is powered on, the terminal can find the corresponding cell by receiving a SSB. Alternatively, when the terminal moves in the NR system, the terminal finds a new cell by receiving a SSB. Each cell may send SSBs periodically in the downlink. For example, SSBs are sent every 20ms or 50ms. Generally, a transmission cycle of SSBs is within a range of 5ms to 160ms. Terminals within a signal range of a cell can receive SSBs sent by the cell.

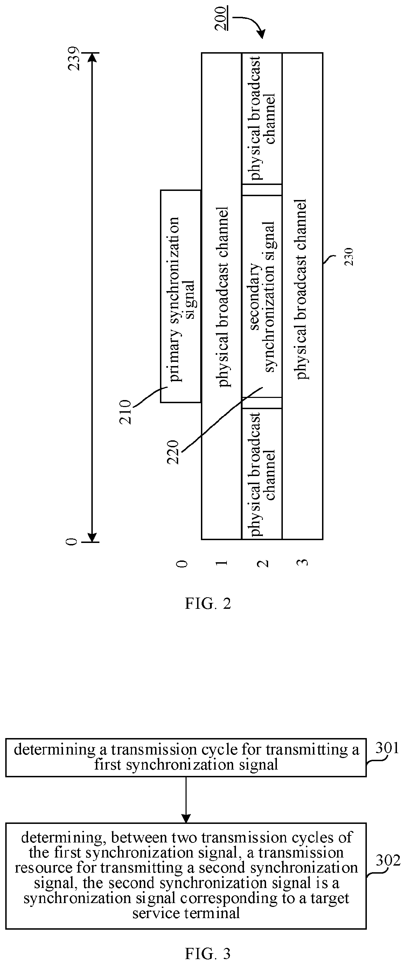

SSB includes three parts: primary synchronization signals (PSS), secondary synchronization signals (SSS), and physical broadcast channel (PBCH). For example, as illustrated in FIG. 2, a synchronization signal block 200 includes a primary synchronization signal 210, a secondary synchronization signal 220, and a physical broadcast channel 230. The SSB lasts for 4 orthogonal frequency division multiplexing (OFDM) symbols in the time domain and lasts for 240 subcarriers in the frequency domain. At the same time, in order to reduce a detection complexity of SSB, the SSB can only be sent on a limited frequency set. For example, as shown in Table 1 below, a center frequency of the SSB can only be within a frequency range as shown in Table 1.

**Table 1**

| Frequency range | a center frequency position requirement for the SSB |
|---|---|
| 0-3000MHz | N^{∗}1200kHz+M^{∗}50kHz |
| | N=1:2499, M∈{1,3,5} (Note 1) |
| 3000-24250MHz | 3000MHz+N^{∗}1.44MHz |
| | N=0: 14756 |

Where, M, N are parameters for calculating the center frequency position.

In the current NR system, when the cell sends SSBs, it sends the SSBs periodically to all terminals in the cell. That is, the SSBs broadcast by the cell may be received by all terminals in the cell. For users of the mid-level MTC NR-Lite devices, due to a small number of antennas in a device, it is more difficult to receive the SSBs in the same reception cycle than other high-level devices. When the signal of the SSB at the edge of the cell is weak, multiple SSBs may be required to be received for merging, the multiple SSBs are merged and demodulated, so as to improve a receiving power of SSBs. However, receiving multiple SSBs for merging requires an increase in receiving time, thus increasing the power consumption of the device.

Since it is difficult for the NR-Lite device to receive SSBs, which leads to long receiving time, the present disclosure aims to reduce the receiving time of the NR-Lite device when receiving SSBs. Other high-level terminal in the NR system can receive SSBs normally, thus it does not affect the normal receiving of SSBs by other devices while reducing the receiving time of NR-Lite device for receiving SSBs.

FIG. 3 is a flow chart of a method for synchronization signal transmission according to an exemplary embodiment of the present disclosure. For example, description is made by performing the method by an access network device. As illustrated in FIG. 3, the method includes followings.

Step 301, a transmission cycle for transmitting a first synchronization signal is determined.

In some embodiments, the first synchronization signal is a uniform synchronization signal sent by a base station to each terminal in a cell, and the first synchronization signal is transmitted according to the transmission cycle. The transmission cycle is a cycle preset in the base station. In some embodiments, the transmission cycle is selected independently by the base station. In other embodiments, the transmission cycle is determined by the base station based on a communication protocol, or the transmission cycle is determined by the base station from a plurality of candidate parameters of the communication protocol. In some embodiments, the transmission cycle is determined through negotiation between the base station and UE. That is, after the base station determines the transmission cycle, the first synchronization signal is broadcast in the transmission cycle. Both NR-Lite devices and non NR-Lite devices within the cell range can receive the first synchronization signal broadcast by the base station.

That is, the first synchronization signal is a synchronization signal for indicating the terminal within the cell range to receive.

In an embodiment of the present disclosure, the transmission cycle refers to time domain resources or frequency domain resources or spatial domain resources for transmitting the first synchronization signal. That is, the transmission cycle is at least two resources with intervals for broadcasting the first synchronization signal periodically.

For example, the first synchronization signal is a synchronization signal supported by the current NR system, and a structure of the first synchronization signal is shown in FIG. 2. The center frequency of the first synchronization signal meets a requirement for a specified frequency set shown in Table 1. In some embodiments, the base station periodically transmits the first synchronization signal, that is, the base station broadcasts the first synchronization signal every preset time period. For example, if the transmission cycle is 20ms, the base station may send the first synchronization signal every 20ms. Generally, a selection range of the transmission cycle is between 5ms and 160ms.

Step 302, a transmission resource for transmitting a second synchronization signal is determined between two transmission cycles of the first synchronization signal, the second synchronization signal is a synchronization signal corresponding to a target service terminal.

The transmission cycle refers to the transmission cycle for transmitting the first synchronization signal.

In some embodiments, between two transmission cycles refers to between any two transmission cycles for transmitting the first synchronization signal, or between two adjacent transmission cycles for transmitting the first synchronization signal, which is not limited in the embodiments of the present disclosure.

In some embodiments, transmitting the second synchronization signal between two transmission cycles means that the resource for transmitting the second synchronization signal does not completely overlap with a previous transmission cycle, and it does not limit whether the resource for transmitting the second synchronization signal overlaps with a next transmission cycle. In some embodiments, transmitting the second synchronization signal between two transmission cycles refers to that the resource for transmitting the second synchronization signal does not completely overlap with the next transmission cycle, and it does not limit whether the resource for transmitting the second synchronization signal overlaps with the previous transmission cycle. In some embodiments, transmitting the second synchronization signal between two transmission cycles refers to that the resource for transmitting the second synchronization signal does not overlap with the previous transmission cycle, and it does not limit whether the resource for transmitting the second synchronization signal overlaps with the next transmission cycle. In some embodiments, transmitting the second synchronization signal between two transmission cycles refers to that the resource for transmitting the second synchronization signal does not overlap with the next transmission cycle, and it does not limit whether the resource for transmitting the second synchronization signal overlaps with the previous transmission cycle. In some embodiments, the second synchronization signal is a synchronization signal corresponding to a mid-level MTC NR-Lite device. That is, other devices except the NR-Lite devices cannot receive the second synchronization signal. Thus, the first synchronization signal and the second synchronization signal are different at the time of transmission, so that other devices except the NR-Lite device cannot use the second synchronization signal. That other devices except the NR-Lite device cannot use the second synchronization signal means that other devices except the NR-Lite devices cannot receive the second synchronization signal, or cannot recognize the second synchronization signal, or cannot decode the second synchronization signal, or the second synchronization signal may be discarded directly by the other devices except the NR-Lite devices.

In some embodiments, the difference between the first synchronization signal and the second synchronization signal includes at least one of the following cases.

First case: a first center frequency of the first synchronization signal meets the requirement for the specified frequency set, and a second center frequency of the second synchronization signal does not meet the requirement for the specified frequency set.

Second case: a first resource mapping mode for transmitting the first synchronization signal is different from a second resource mapping mode for transmitting the second synchronization signal.

Third case: the first synchronization signal includes the first PSS, the first SSS and the first PBCH, and the second synchronization signal includes part of the first synchronization signal.

In some embodiments, a transmission mode of the second synchronization signal is a transmission mode predefined by a protocol. Optionally, the transmission mode of the second synchronization signal is a transmission mode pre-configured by the access network device. That is, the access network device sends a control signaling to the terminal. The control signaling includes an information field, the information field is used to indicate the transmission mode of the second synchronization signal. The control signaling can be any of the following: a physical layer signaling, a radio resource control (RRC) signaling, and a media access control element (MAC CE).

In the following, the above three cases are respectively illustrated by embodiments.

For the first case, in the above embodiments, the first center frequency of the first synchronization signal meets the requirement for the specified frequency set, and the second center frequency of the second synchronization signal does not meet the requirement for the specified frequency set.

The first synchronization signal is the synchronization signal for indicating the terminals corresponding to respective services in the cell to receive it, thus, the SSB can only be sent on a limited frequency set to reduce a detection complexity of the SSB, such as the requirement for the specified frequency set shown in Table 1. Therefore, the first center frequency of the first SSB may meet the requirement for the specified frequency set shown in Table 1. The second synchronization signal is a synchronization signal is a synchronization signal for indicating the target service terminal to receive. For example, the second synchronization signal is a synchronization signal indicating the NR-Lite terminal to receive. Thus, the second center frequency of the second SSB does not meet the requirement for the specified frequency set shown in Table 1, so other terminals except the NR-Lite terminal cannot receive the second SSB, and the NR-Lite terminal is configured to know the second center frequency of the second SSB.

In some embodiments, a frequency set corresponding to the second center frequency of the second SSB is predefined by a protocol. In some embodiments, the frequency set corresponding to the second center frequency of the second SSB is pre-configured in the access network device. When the access network device configures the frequency set corresponding to the second center frequency for the terminal, the access network device sends a control signaling to the target service terminal. The control signaling includes an information field, the information field is used to indicate the frequency set corresponding to the center frequency of the second SSB. In some embodiments, the second center frequency of the second SSB is determined by the access network device based on multiple candidate parameters given by a protocol. That is, the access network device sends a control signaling to the target service terminal. The control signaling includes an information field used to indicate that one or more of the multiple candidate parameters are the frequency set corresponding to the center frequency of the second SSB. The information field can be an identifier of the frequency set corresponding to the center frequency of the corresponding second SSB. In some embodiments, the frequency set corresponding to the center frequency of the second SSB may include one or more frequencies.

The information field can be a number value of frequency set corresponding to the center frequency of the second SSB, or may be an identifier used to indicate a frequency set corresponding to the center frequency of the second SSB. The access network device and the terminal have a correspondence relationship between the frequency set corresponding to the center frequency of the second SSB and the identifier. In some embodiments, the correspondence relationship can be determined according to a protocol, or may be configured to the terminal by the access network device, or may be determined through negotiation between the access network device and the terminal, or may be determined and reported to the access network device by the terminal.

When transmitting the first synchronization signal and the second synchronization signal, the access network device transmits the first synchronization signal according to the requirement for the specified frequency set according to the transmission cycle, and transmits the second synchronization signal according to the frequency set corresponding to the center frequency of the second SSB between the transmission cycles of the first synchronization signal.

For the second case, in the above embodiment, the first resource mapping mode for transmitting the first synchronization signal may be different from the second resource mapping mode for transmitting the second synchronization signal.

In some embodiments, a resource mapping mode includes at least one of a number of OFDM symbols for transmitting a SSB, a number of frequency resources for transmitting a SSB, a resource mapping number of OFDM symbols for transmitting a SSB, and a relative position relationship of PSS, SSS, and PBCH in an SSB.
1. In some embodiments, the first resource mapping mode includes a first number of OFDM symbols for transmitting the first SSB, and the second resource mapping mode includes a second number of OFDM symbols for transmitting the second SSB. The first number of OFDM symbols is different from the second number of OFDM symbols.

For example, the first SSB is a synchronization signal supported by the current system, so a format of the first SSB is consistent with a uniform SSB format in the current system. That is, the first SSB lasts for 4 OFDM symbols in the time domain. The second SSB is a synchronization signal designed for the target service terminal, thus the second SSB is a synchronization signal that cannot be received by other terminals except the target service terminal. When the first SSB lasts for 4 OFDM symbols in the time domain, the second SSB lasts for 3 OFDM symbols in the time domain, or the second SSB lasts for 5 OFDM symbols in the time domain. The number of OFDM symbols for transmitting the second SSB in the time domain can be more or less, while, the number of OFDM symbols for transmitting the second SSB in the time domain is not 4.

In some embodiments, the second number of OFDM symbols for transmitting the second SSB in the time domain is predefined by a protocol. In some embodiments, the second number of OFDM symbols for transmitting the second SSB in the time domain is pre-configured in the access network device. When the access network device configures the number of OFDM symbols for transmitting the second SSB in the time domain to the terminal, the access network device sends a control signaling to the target service terminal. The control signaling includes an information field. The information field is used to indicate the number of OFDM symbols for transmitting the second SSB in the time domain. The information field can be either the number value of OFDM symbols or an identifier used to indicate the number of OFDM symbols. The access network device and the terminal have a correspondence relationship between the number of OFDM symbols and the identifier. The correspondence relationship can be determined according to a protocol or may be configured for the terminal by the access network device.

2. In some embodiments, the first resource mapping mode includes a first number of frequency resources for transmitting the first SSB, and the second resource mapping mode includes a second number of frequency resources for transmitting the second SSB. The first number is different from the second number.

For example, the first SSB is the synchronization signal supported by the current system, so the format of the first SSB is consistent with the uniform SSB format in the current system. That is, the first SSB occupies 240 subcarriers in the frequency domain. The second SSB is the synchronization signal designed for the target service terminal, thus the second SSB is the synchronization signal that cannot be received by other terminals except the target service terminal. For example, when the first SSB occupies 240 subcarriers in the frequency domain, the second SSB occupies 230 subcarriers in the frequency domain, or the second SSB occupies 250 subcarriers in the frequency domain. That is, a number of subcarriers for transmitting the second SSB in the frequency domain can be more or less than the number of subcarriers for transmitting the first SSB in the frequency domain, and the number of subcarriers for transmitting the second SSB in the frequency domain is not equal to the number of subcarriers for transmitting the first SSB in the frequency domain (that is, not 240).

In some embodiments, the second number of frequency resources for transmitting the second SSB in the frequency domain is predefined by a protocol. In some embodiments, the second number of frequency resources for transmitting the second SSB in the frequency domain is pre-configured in the access network device. When the access network device configures the number of frequency resources for transmitting the second SSB in the frequency domain to the terminal, the access network device sends a control signaling to the target service terminal. The control signaling includes an information field. The information field is used to indicate the number of frequency resources for transmitting the second SSB in the frequency domain. The information field can be either the value of the second number of frequency resources, or an identifier used to indicate the second number of frequency resources. The access network device and the terminal have a correspondence relationship between the second number of frequency resources and the identifier, and the correspondence relationship can be determined according to a protocol or configured for the terminal by the access network device.

3. In some embodiments, the first resource mapping mode includes a first resource mapping number of OFDM symbols for transmitting the first SSB, and the second resource mapping mode includes a second resource mapping number of OFDM symbols for transmitting the second SSB. The first resource mapping number is different from the second resource mapping number.

For example, the first SSB occupies four OFDM symbols in the time domain, and the resource numbers mapped by the four OFDM symbols are 3, 4, 5, and 6 respectively. That is, the first SSB successively maps to the third OFDM symbol, the fourth OFDM symbol, the fifth OFDM symbol, and the sixth OFDM symbol in the time domain. The second SSB occupies four OFDM symbols in the time domain, and the resource numbers mapped by the four OFDM symbols are 6, 3, 5, and 4. That is, the second SSB successively maps to the sixth OFDM symbol, the third OFDM symbol, the fifth OFDM symbol, and the fourth OFDM symbol in the time domain.

In some embodiments, the resource mapping number of OFDM symbols for transmitting the second SSB in the time domain is predefined by a protocol. In some embodiments, the resource mapping number of OFDM symbols for transmitting the second SSB in the time domain is pre-configured in the access network device. When the access network device configures the resource mapping number of OFDM symbols for transmitting the second SSB to the terminal, the access network device sends a control signaling to the target service terminal. The control signaling includes an information field. The information field is used to indicate the resource mapping number of the OFDM symbols for transmitting the second SSB. The information field can be either the value of the resource mapping number of the OFDM symbols for transmitting the second SSB, or an identifier used to indicate the resource mapping number of the OFDM symbols for transmitting the second SSB. The access network device and the terminal have a correspondence relationship between the resource mapping number of the OFDM symbols for transmitting the second SSB and identifier, and the correspondence relationship can be determined according to a protocol or may be configured for the terminal by the access network device.

4. In some embodiments, the first SSB includes a first PSS, a first SSS, and a first PBCH. The first PSS, the first SSS, and the first PBCH are arranged in the first SSB in a first relative position relationship. The second SSB includes the second PSS, the second SSS, and the second PBCH. The second PSS, the second SSS, and the second PBCH are arranged in the second SSB in a second relative position relationship. The first relative position relationship is different from the second relative position relationship.

For example, the first SSB is the synchronization signal supported by the current system, so the format of the first SSB is consistent with the uniform SSB format in the current system. That is, the first relative position relationship among the first PSS, the first SSS and the first PBCH in the first SSB meets the position relationship among the PSS, SSS and PBCH in the SSB as shown in FIG. 2. The second SSB is a synchronization signal designed for the target service terminal, thus the second SSB is a synchronization signal that cannot be received by other terminals except the target service terminal. Therefore, the second relative position relationship among the second PSS, the second SSS and the second PBCH in the second SSB is different from the position relationship among the PSS, SSS and PBCH in the SSB shown in FIG. 2. In some embodiments, the relative position of the second SSS and the second PSS in the second SSB are reversed to the relative position of the first SSS and the first PSS in the first SSB.

In some embodiments, the second relative position relationship of the second PSS, the second SSS and the second PBCH in the second SSB can be predefined by a protocol or may be pre-configured in the access network device. When the access network device configures the second relative position relationship in the second SSB to the terminal, the access network device sends a control signaling to the target service terminal. The control signaling includes an information field. The information field is used to indicate the second relative position relationship in the second SSB. The information field can be the value of the second relative position relationship, or an identifier used to indicate the second relative position relationship. The access network device and the terminal have a correspondence relationship between the second relative position relationship and the identifier. In some embodiments, the correspondence relationship can be determined according to a protocol, or may be configured to the terminal by the access network device, or may be determined through negotiation between the access network device and the terminal, or may be determined and reported to the access network device by the terminal.

For the third case, in the above embodiment, the second synchronization signal may include part of the first synchronization signal.

In some embodiments, the second synchronization signal includes one part of the first PSS, the first SSS and the first PBCH. For example, the second synchronization signal includes the first PSS only, or, the second synchronization signal includes the first SSS only, or, the second synchronization signal includes the first PBCH only.

In some embodiments, the second synchronization signal includes two parts of the first PSS, the first SSS and the first PBCH. For example, the second synchronization signal includes the first PSS and the first PBCH, or, the second synchronization signal includes the first SSS and the first PBCH, or, the second synchronization signal includes the first PSS and the first SSS.

In some embodiments, the second synchronization signal includes the first PSS, the first SSS and part of the first PBCH. That is, the first PBCH in the second synchronization signal is not the whole first PBCH, but a part of the first PBCH in the first SSB.

In some embodiments, the second synchronization signal includes part of the first PBCH. In some embodiments, the second synchronization signal includes part of the first PBCH, and further include the first PSS and/or the first SSS. The first PBCH in the second synchronization signal is not the whole first PBCH, but a part of the first PBCH in the first SSB.

That is, the second synchronization signal does not include the first PSS, the first SSS and the complete first PBCH at the same time.

In some embodiments, the content included in the second SSB can be predefined by a protocol or pre-configured in the access network device. When the access network device configures the content included in the second SSB to the terminal, the access network device sends a control signaling to the target service terminal. The control signaling includes an information field. The information field is used to indicate the content included in the second SSB. The information field can be a field of the content included in the second SSB, or an identifier used to indicate the content included in the second SSB. The access network device and the terminal have a correspondence relationship between the content included in the second SSB and the identifier. The correspondence relationship can be determined according to a protocol or configured for the terminal by the access network device.

In conclusion, with the method for synchronization signal transmission provided by the embodiments of the present disclosure, by adding the transmission of the second synchronization signal between the transmission cycles of the first synchronization signal, the target service terminal can receive the second synchronization signal, thereby reducing total duration of receiving multiple synchronization signals, and reducing power consumption of the device while reducing the number of device antennas.

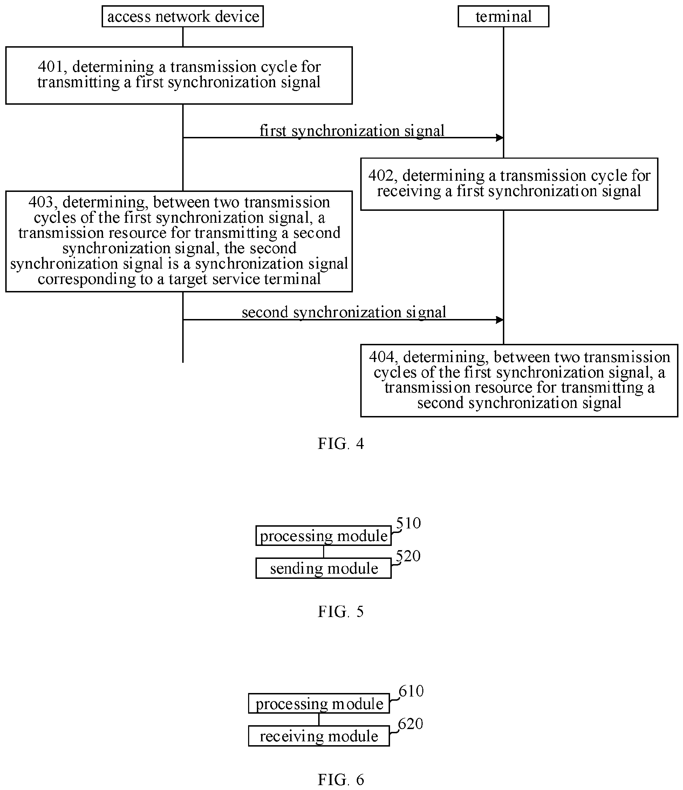

FIG. 4 is a flow chart of a method for synchronization signal transmission according to another exemplary embodiment of the present disclosure. For example, description is made to performing the method in the communication system illustrated in FIG. 1. As illustrated in FIG. 4, the method includes the following.

Step 401, an access network device determines a transmission cycle for transmitting a first synchronization signal.

In some embodiments, the first synchronization signal is a uniform synchronization signal sent by a base station to each terminal in a cell, and the first synchronization signal is transmitted according to the transmission cycle. The transmission cycle is a cycle preset in the base station. In some embodiments, the transmission cycle is selected independently by the base station. In other embodiments, the transmission cycle is determined by the base station based on a communication protocol, or the transmission cycle is determined by the base station from a plurality of candidate parameters of the communication protocol. In some embodiments, the transmission cycle is determined through negotiation between the base station and UE. That is, after the base station determines the transmission cycle, the first synchronization signal is broadcast in the transmission cycle. Both NR-Lite devices and non NR-Lite devices within the cell range can receive the first synchronization signal broadcast by the base station.

That is, the first synchronization signal is a synchronization signal for indicating the terminal within the cell range to receive.

Step 402, a terminal determines a transmission cycle for receiving a first synchronization signal.

In some embodiments, the terminal is located in the cell range, so the terminal receives the first synchronization signal sent by the access network device according to the transmission cycle.

Step 403, the access network device determines, between two transmission cycles of the first synchronization signal, a transmission resource for transmitting a second synchronization signal, the second synchronization signal is a synchronization signal corresponding to a target service terminal.

In some embodiments, the second synchronization signal is a synchronization signal corresponding to a mid-level MTC NR-Lite device. That is, other devices except the NR-Lite devices cannot receive the second synchronization signal. Thus, the first synchronization signal and the second synchronization signal are different at the time of transmission, so that other devices except the NR-Lite device cannot use the second synchronization signal.

Step 404, the terminal determines, between two transmission cycles of the first synchronization signal, a transmission resource for transmitting a second synchronization signal.

The transmission cycle refers to the transmission cycle for transmitting the first synchronization signal.

In some embodiments, between two transmission cycles refers to between any two transmission cycles for transmitting the first synchronization signal, or between two adjacent transmission cycles for transmitting the first synchronization signal, which is not limited in the embodiments of the present disclosure.

In some embodiments, the terminal is a mid-level NR-Lite device of MTC, i.e., a mid-level MTC NR-Lite device.

In some embodiments, the difference between the first synchronization signal and the second synchronization signal includes at least one of the following cases.

First case: a first center frequency of the first synchronization signal meets the requirement for the specified frequency set, and a second center frequency of the second synchronization signal does not meet the requirement for the specified frequency set.

Second case: a first resource mapping mode for transmitting the first synchronization signal is different from a second resource mapping mode for transmitting the second synchronization signal.

In some embodiments, the first resource mapping mode includes a first number of OFDM symbols for receiving the first synchronization signal. The second resource mapping mode includes a second number of OFDM symbols for receiving the second synchronization signal. The first number of OFDM symbols is different from the second number of OFDM symbols.

In some embodiments, the first resource mapping mode includes a first number of frequency resources for receiving the first synchronization signal. The second resource mapping mode includes a second number of frequency resources for receiving the second synchronization signal. The first number of frequency resources is different from the second number of frequency resources.

In some embodiments, the first resource mapping mode includes a first resource mapping number of OFDM symbols for receiving the first synchronization signal. The second resource mapping mode includes a second resource mapping number of OFDM symbols for receiving the second synchronization signal. The first resource mapping number is different from the second resource mapping number.

In some embodiments, the first synchronization signal includes a first primary synchronization signal (PSS), a first secondary synchronization signal (SSS) and a first physical broadcast channel (PBCH), the first PSS, the first SSS and the first PBCH are arranged in a first relative position relationship in the first synchronization signal. The second synchronization signal includes a second primary synchronization signal (PSS), a second secondary synchronization signal (SSS) and a second physical broadcast channel (PBCH). The second PSS, the second SSS and the second PBCH are arranged in a second relative position relationship in the second synchronization signal. The first relative position relationship is different from the second relative position relationship.

Third case: the first synchronization signal includes the first PSS, the first SSS and the first PBCH, and the second synchronization signal includes part of the first synchronization signal.

In some embodiments, a transmission mode of the second synchronization signal is a transmission mode predefined by a protocol. Optionally, the transmission mode of the second synchronization signal is a transmission mode pre-configured by the access network device. That is, the terminal receives a control signaling. The control signaling includes an information field, the information field is used to indicate the transmission mode of the second synchronization signal. The control signaling can be any of the following: a physical layer signaling, an RRC signaling, and an MAC CE.

In conclusion, with the method for synchronization signal transmission provided by the embodiments of the present disclosure, by adding the transmission of the second synchronization signal between the transmission cycles of the first synchronization signal, the target service terminal can receive the second synchronization signal, thereby reducing total duration of receiving multiple synchronization signals, and reducing power consumption of the device while reducing the number of device antennas.

FIG. 5 is a block diagram illustrating an apparatus for synchronization signal transmission according to an exemplary embodiment of the present disclosure. As illustrated in FIG. 5, the apparatus includes a processing module 510.

The processing module 510 is configured to determine a transmission cycle for transmitting a first synchronization signal.

The processing module 510 is further configured to transmit a second synchronization signal between two transmission cycles of the first synchronization signal. The second synchronization signal is a synchronization signal corresponding to a target service terminal.

In an optional embodiment, the second synchronization signal is a synchronization signal corresponding to a mid-level NR-Lite device of a Machine Type of Communication.

In an optional embodiment, a first center frequency of the first synchronization signal meets a requirement for a specified frequency set;
a second center frequency of the second synchronization signal does not meet the requirement for the specified frequency set.

In an optional embodiment, a first resource mapping mode for transmitting the first synchronization signal is different from a second resource mapping mode for transmitting the second synchronization signal.

In an optional embodiment, the first resource mapping mode includes a first number of orthogonal frequency division multiplexing (OFDM) symbols for transmitting the first synchronization signal;
the second resource mapping mode includes a second number of orthogonal frequency division multiplexing (OFDM) symbols for transmitting the second synchronization signal;
the first number of OFDM symbols is different from the second number of OFDM symbols.

In an optional embodiment, the first resource mapping mode includes a first number of frequency resources for transmitting the first synchronization signal;
the second resource mapping mode includes a second number of frequency resources for transmitting the second synchronization signal;
the first number of frequency resources is different from the second number of frequency resources.

In an optional embodiment, the first resource mapping mode includes a first resource mapping number of OFDM symbols for transmitting the first synchronization signal;
the second resource mapping mode includes a second resource mapping number of OFDM symbols for transmitting the second synchronization signal;
the first resource mapping number is different from the second resource mapping number.

In an optional embodiment, the first synchronization signal includes a first primary synchronization signal (PSS), a first secondary synchronization signal (SSS) and a first physical broadcast channel (PBCH), the first PSS, the first SSS and the first PBCH are arranged in a first relative position relationship in the first synchronization signal;
the second synchronization signal includes a second primary synchronization signal (PSS), a second secondary synchronization signal (SSS) and a second physical broadcast channel (PBCH); the second PSS, the second SSS and the second PBCH are arranged in a second relative position relationship in the second synchronization signal;
the first relative position relationship is different from the second relative position relationship.

In an optional embodiment, the first synchronization signal includes a first primary synchronization signal (PSS), a first secondary synchronization signal (SSS) and a first physical broadcast channel (PBCH);
the second synchronization signal includes part of the first synchronization signal.

In an optional embodiment, a transmission mode of the second synchronization signal is a transmission mode predefined by a protocol;
or,
the apparatus further includes a sending module 520. The sending module 520 is configured to send a control signaling to a terminal. The control signaling includes an information field used to indicate the transmission mode of the second synchronization signal.

FIG. 6 is a block diagram illustrating an apparatus for synchronization signal transmission according to another exemplary embodiment of the present disclosure. As illustrated in FIG. 6, the apparatus includes a processing module 610.

The processing module 610 is configured to determine a transmission cycle for receiving a first synchronization signal.

The processing module 610 is further configured to determine, between two transmission cycles of the first synchronization signal, a transmission resource for transmitting a second synchronization signal. The terminal is a target service terminal corresponding to the target service type.

In an optional embodiment, the terminal is a mid-level NR-Lite device of Machine Type of Communication.

In an optional embodiment, a first center frequency of the first synchronization signal meets a requirement for a specified frequency set;
a second center frequency of the second synchronization signal does not meet the requirement for the specified frequency set.

In an optional embodiment, a first resource mapping mode for receiving the first synchronization signal is different from a second resource mapping mode for receiving the second synchronization signal.

In an optional embodiment, the first resource mapping mode includes a first number of OFDM symbols for receiving the first synchronization signal;
the second resource mapping mode includes a second number of OFDM symbols for receiving the second synchronization signal;
the first number of OFDM symbols is different from the second number of OFDM symbols.

In an optional embodiment, the first resource mapping mode includes a first number of frequency resources for receiving the first synchronization signal;
the second resource mapping mode includes a second number of frequency resources for receiving the second synchronization signal;
the first number of frequency resources is different from the second number of frequency resources.

In an optional embodiment, the first resource mapping mode includes a first resource mapping number of OFDM symbols for receiving the first synchronization signal;
the second resource mapping mode includes a second resource mapping number of OFDM symbols for receiving the second synchronization signal;
the first resource mapping number is different from the second resource mapping number.

In an optional embodiment, the first synchronization signal includes a first primary synchronization signal (PSS), a first secondary synchronization signal (SSS) and a first physical broadcast channel (PBCH), the first PSS, the first SSS and the first PBCH are arranged in a first relative position relationship in the first synchronization signal;
the second synchronization signal includes a second primary synchronization signal (PSS), a second secondary synchronization signal (SSS) and a second physical broadcast channel (PBCH); the second PSS, the second SSS and the second PBCH are arranged in a second relative position relationship in the second synchronization signal;
the first relative position relationship is different from the second relative position relationship.

In an optional embodiment, the first synchronization signal includes a first primary synchronization signal (PSS), a first secondary synchronization signal (SSS) and a first physical broadcast channel (PBCH);
the second synchronization signal includes part of the first synchronization signal.

In an optional embodiment, a transmission mode of the second synchronization signal is a transmission mode predefined by a protocol;
or,
the apparatus further includes a receiving module 620. The receiving module620 is configured to receive a control signaling. The control signaling comprises an information field used to indicate the transmission mode of the second synchronization signal.

In conclusion, with the apparatus for synchronization signal transmission provided by the embodiments of the present disclosure, by adding the transmission of the second synchronization signal between the transmission cycles of the first synchronization signal, the target service terminal can receive the second synchronization signal, thereby reducing total duration of receiving multiple synchronization signals, and reducing power consumption of the device while reducing the number of device antennas.

It should be noted that the above apparatus for synchronization signal transmission provided by the above embodiments only takes the division of the above functional modules as an example for description. In practical applications, the above functions may be allocated to different functional modules for implementation according to needs. That is, the internal structure of the device is divided into different functional modules to complete all or part of the above described contents.

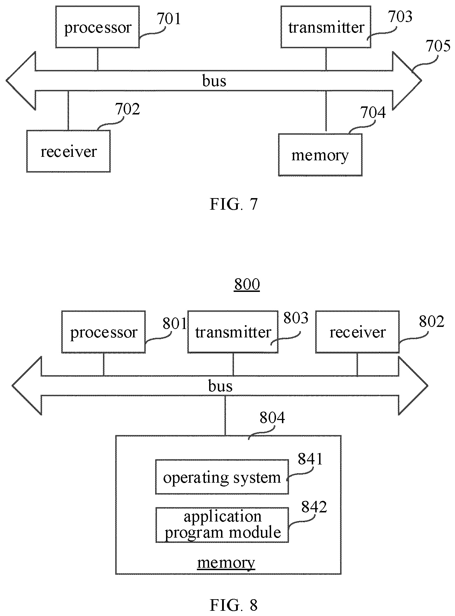

FIG. 7 is a block diagram illustrating a terminal according to an exemplary embodiment of the present disclosure. The terminal includes a processor 701, a receiver 702, a transmitter 703, a memory 704 and a bus 705.

The processor 701 includes one or more processing cores. The processor 701 executes various functional applications and information processing by running software programs and modules.

The receiver 702 and transmitter 703 can be implemented as a communication component, which can be a communication chip.

The memory 704 is connected to the processor 701 via the bus 705.

The memory 704 may be used to store at least one instruction, and the processor 701 may be used to execute the at least one instruction to implement the various steps in the above method embodiment.

In addition, the memory 704 can be realized by any type of volatile or nonvolatile storage devices or their combinations. The volatile or nonvolatile storage devices include, but are not limited to: a disk or an optical disk, an electrically erasable programmable read-only memory (EEPROM), an erasable programmable read-only memory (EPROM), a static random access memory (SRAM), a read-only memory (ROM), a magnetic memory, a flash memory, a programmable read only memory (PROM).

In an exemplary embodiment, a non-transitory computer-readable storage medium including instructions is also provided, such as a memory including instructions. The instructions can be executed by a processor of a terminal to implement the method for synchronization signal transmission executed by the terminal side. For example, the non-transitory computer-readable storage medium can be a ROM, a random access memory (RAM), a CD-ROM, a tape, a floppy disk, an optical data storage device, etc.

A non-transitory computer-readable storage medium enables a terminal to execute the method for synchronization signal transmission when instructions in the non-transitory computer-readable storage medium are executed by a processor of a terminal.

FIG. 8 is a block diagram illustrating an access network device 800 according to an exemplary embodiment of the present disclosure. In some embodiments, the access network device 800 is a base station.

The access network device 800 includes a processor 801, a receiver 802, a transmitter 803, and a memory 804. The receiver 802, the transmitter 803 and the memory 804 are respectively connected with the processor 801 through a bus.

The processor 801 includes one or more processing cores, and the processor 801 executes the method performed by the access network device in the method for synchronization signal transmission provided by the embodiments of the present disclosure by running software programs and modules. The memory 804 may be used to store software programs and modules. Specifically, the memory 804 may store an operating system 841 and an application program module 842 required for at least one function. The receiver 802 is used to receive communication data sent by other devices, and the transmitter 803 is used to send communication data to other devices.

An embodiment of the present disclosure also provides a communication system, which comprises a terminal and an access network device.

The access network device includes the apparatus for synchronization signal transmission provided by the embodiment as illustrated in FIG. 5.

The terminal includes the apparatus for synchronization signal transmission provided by the embodiment as illustrated in FIG. 6.

An embodiment of the present disclosure also provides a communication system, which comprises a terminal and an access network device;

The terminal includes the terminal provided by the embodiment as illustrated in FIG.7.

The access network device includes the access network device provided by the embodiment as illustrated in FIG. 8.

An embodiment of the present disclosure also provides a computer-readable storage medium in which at least one instruction, at least one program, a code set or an instruction set are stored, and the at least one instruction, at least one program, the code set or the instruction set is loaded and executed by a processor to implement the steps executed by the terminal or the access network device in the method for synchronization signal transmission provided by the above method embodiments.

It should be understood that the term "multiple" mentioned herein refers to two or more. "and/or" describes the association relationship of associated objects, indicating that there can be three kinds of relationships, for example, A and/or B, which can indicate that there are three cases: A alone, A and B together, and B alone. The character "/" generally indicates that the context object is an OR relationship.

After considering the specification and practicing the disclosure disclosed herein, those skilled in the art may easily think of other embodiments of the disclosure. The disclosure is intended to cover any v variations, uses, or adaptive changes of the disclosure, which follow the general principles of the disclosure and include the common general knowledge or customary technical means in the technical field not disclosed in the disclosure. The description and embodiments are only regarded as exemplary, and the true scope and spirit of the present disclosure are defined in the appended claims.

It should be understood that the present disclosure is not limited to the precise structure already described above and shown in the drawings, and various modifications and changes can be made without departing from its scope. The scope of this disclosure is limited only by the appended claims.

## Claims

1. A method for synchronization signal transmission, performed by an access network device and comprising:
determining a transmission cycle for transmitting a first synchronization signal; and
determining, between two transmission cycles of the first synchronization signal, a transmission resource for transmitting a second synchronization signal, wherein the second synchronization signal is a synchronization signal corresponding to a target service terminal.

2. The method according to claim 1, wherein the second synchronization signal is a synchronization signal corresponding to a mid-level NR (new radio)-Lite device of a Machine Type of Communication.

3. The method according to claim 1, wherein,
a first center frequency of the first synchronization signal meets a requirement for a specified frequency set;
a second center frequency of the second synchronization signal does not meet the requirement for the specified frequency set.

4. The method according to claim 1, wherein a first resource mapping mode for transmitting the first synchronization signal is different from a second resource mapping mode for transmitting the second synchronization signal.

5. The method according to claim 4, wherein,
the first resource mapping mode comprises a first number of orthogonal frequency division multiplexing (OFDM) symbols for transmitting the first synchronization signal;
the second resource mapping mode comprises a second number of orthogonal frequency division multiplexing (OFDM) symbols for transmitting the second synchronization signal;
the first number of OFDM symbols is different from the second number of OFDM symbols.

6. The method according to claim 4, wherein,
the first resource mapping mode comprises a first number of frequency resources for transmitting the first synchronization signal;
the second resource mapping mode comprises a second number of frequency resources for transmitting the second synchronization signal;
the first number of frequency resources is different from the second number of frequency

7. The method according to claim 4, wherein,
the first resource mapping mode comprises a first resource mapping number of OFDM symbols for transmitting the first synchronization signal;
the second resource mapping mode comprises a second resource mapping number of OFDM symbols for transmitting the second synchronization signal;
the first resource mapping number is different from the second resource mapping number.

8. The method according to claim 4, wherein,
the first synchronization signal comprises a first primary synchronization signal (PSS), a first secondary synchronization signal (SSS) and a first physical broadcast channel (PBCH); wherein the first PSS, the first SSS and the first PBCH are arranged in a first relative position relationship in the first synchronization signal;
the second synchronization signal comprises a second primary synchronization signal (PSS), a second secondary synchronization signal (SSS) and a second physical broadcast channel (PBCH); wherein the second PSS, the second SSS and the second PBCH are arranged in a second relative position relationship in the second synchronization signal;
the first relative position relationship is different from the second relative position relationship.

9. The method according to claim 1, wherein,
the first synchronization signal comprises a first primary synchronization signal (PSS), a first secondary synchronization signal (SSS) and a first physical broadcast channel (PBCH);
the second synchronization signal comprises part of the first synchronization signal.

10. The method according to any of claims 1 to 9, wherein,
a transmission mode of the second synchronization signal is a transmission mode predefined by a protocol;
or,
sending a control signaling to a terminal, wherein the control signaling comprises an information field configured for indicating the transmission mode of the second synchronization signal.

11. A method for synchronization signal transmission, performed by a terminal and comprising:
determining a transmission cycle for receiving a first synchronization signal; and
determining, between two transmission cycles of the first synchronization signal, a transmission resource for transmitting a second synchronization signal, wherein the terminal is a target service terminal corresponding to the target service type.

12. The method according to claim 11, wherein the terminal is a mid-level NR (new radio)-Lite device of Machine Type of Communication.

13. The method according to claim 11, wherein,
a first center frequency of the first synchronization signal meets a requirement for a specified frequency set ;
a second center frequency of the second synchronization signal does not meet the requirement for the specified frequency set.

14. The method according to claim 11, wherein a first resource mapping mode for receiving the first synchronization signal is different from a second resource mapping mode for receiving the second synchronization signal.

15. The method according to claim 14, wherein,
the first resource mapping mode comprises a first number of OFDM symbols for receiving the first synchronization signal;
the second resource mapping mode comprises a second number of OFDM symbols for receiving the second synchronization signal;
the first number of OFDM symbols is different from the second number of OFDM symbols.

16. The method according to claim 14, wherein,
the first resource mapping mode comprises a first number of frequency resources for receiving the first synchronization signal;
the second resource mapping mode comprises a second number of frequency resources for receiving the second synchronization signal;
the first number of frequency resources is different from the second number of frequency resources.

17. The method according to claim 14, wherein,
the first resource mapping mode comprises a first resource mapping number of OFDM symbols for receiving the first synchronization signal;
the second resource mapping mode comprises a second resource mapping number of OFDM symbols for receiving the second synchronization signal;
the first resource mapping number is different from the second resource mapping number.

18. The method according to claim 14, wherein,
the first synchronization signal comprises a first primary synchronization signal (PSS), a first secondary synchronization signal (SSS) and a first physical broadcast channel (PBCH); wherein the first PSS, the first SSS and the first PBCH are arranged in a first relative position relationship in the first synchronization signal;
the second synchronization signal comprises a second primary synchronization signal (PSS), a second secondary synchronization signal (SSS) and a second physical broadcast channel (PBCH); wherein the second PSS, the second SSS and the second PBCH are arranged in a second relative position relationship in the second synchronization signal;
the first relative position relationship is different from the second relative position relationship.

19. The method according to claim 11, wherein,
the first synchronization signal comprises a first primary synchronization signal (PSS), a first secondary synchronization signal (SSS) and a first physical broadcast channel (PBCH);
the second synchronization signal comprises part of the first synchronization signal.

20. The method according to any of claims 11 to 19, wherein,
a transmission mode of the second synchronization signal is a transmission mode predefined by a protocol;
or,
receiving a control signaling, wherein the control signaling comprises an information field configured for indicating the transmission mode of the second synchronization signal.

21. An apparatus for synchronization signal transmission, implemented by an access network device and comprising:
a processing module, configured to determine a transmission cycle for transmitting a first synchronization signal;
wherein the processing module is further configured to transmit a second synchronization signal between two transmission cycles of the first synchronization signal, wherein the second synchronization signal is a synchronization signal corresponding to a target service terminal.

22. An apparatus for synchronization signal transmission, implemented by a terminal and comprising:
a processing module, configured to determine a transmission cycle for receiving a first synchronization signal; and
wherein the processing module is further configured to determine, between two transmission cycles of the first synchronization signal, a transmission resource for transmitting a second synchronization signal, wherein the terminal is a target service terminal corresponding to the target service type.

23. An access network device, comprising:
a processor; and
a transceiver connected to the processor;
wherein the processor is configured to load and execute executable instructions to implement the method for synchronization signal transmission according to any one of claims 1 to 10.

24. A terminal, comprising:
a processor; and
a transceiver connected to the processor;
wherein the processor is configured to load and execute executable instructions to implement the method for synchronization signal transmission according to any one of claims 11 to 20.

25. A computer-readable storage medium having at least one instruction, at least one program, a code set or an instruction set stored thereon, wherein the at least one instruction, the at least one program, the code set or the instruction set is loaded and executed by a processor to implement the method for synchronization signal transmission according to any of clams 1 to 20.
